# FASCICULE DE BREVET EUROPEEN

(11) **EP 0 398 212 B1**
(45) Date de publication et mention de la délivrance du brevet: **17.08.1994**
(21) Numéro de dépôt: 90109021.7
(22) Date de dépôt: 14.05.1990
(51) Int. Cl.: H04M 1/03

(54) **Combiné téléphonique**
Telefon-Handapparat
Telephone handset

(30) Priorité: 16.05.1989 FR 8906365
(43) Date de publication de la demande: 22.11.1990
(73) Titulaire: ALCATEL BUSINESS SYSTEMS, F-75008 Paris (FR)
(72) Inventeur: Abraham, Denis, F-92170 Vanves (FR); Bourel, Christian, F-95150 Taverny (FR); Beauval, Didier, F-76550 Offranville (FR)
(74) Mandataire: Weinmiller, Jürgen

(56) Documents cités:
- EP-A- 0 085 496
- DE-A- 2 119 907
- FR-A- 2 219 584
- US-A- 4 302 695
- PATENT ABSTRACTS OF JAPAN, vol. 11, no. 138 (E-503)[2585], 2 mai 1987 & JP-A-61 278 247

## Description

L'invention concerne un combiné téléphonique dont au moins le transducteur récepteur est de type piézo-électrique selon le préambule de la revendication 1. Un tel combiné est connu, par exemple à partir du document DE-A-21 19 907.

Les combinés téléphoniques comportent usuellement deux transducteurs dont l'un est utilisé en tant que microphone et assure la conversion de sons en signaux électriques, alors que l'autre, dit récepteur, assure une conversion inverse de signaux électriques en ondes sonores.

Ces transducteurs, qui sont éventuellement identiques notamment s'ils sont de type piézo-électrique, sont classiquement contenus dans des capsules individuelles que l'on monte par paire dans les combinés téléphoniques.

Il est actuellement avantageux d'associer un transducteur à électret servant de microphone à un transducteur piézo-électrique agissant en tant que récepteur, dans un combiné téléphonique pour des raisons économiques. Il est aussi commercialement souhaitable pour le fabricant de pouvoir équiper un même combiné à la demande avec l'une ou l'autre des capsules téléphoniques existantes et par exemple de substituer aisément un transducteur électrodynamique à un transducteur piézo-électrique, si besoin est. Ces diverses raisons conduisent les fabricants à simplifier les combinés et leur assemblage pour obtenir des prix de revient compétitifs tout en améliorant la qualité et la facilité d'usage.

L'invention propose donc un combiné téléphonique, dont la structure est allégée par suppression d'organes superflus et dont l'assemblage est simplifié en conséquence. Ce combiné est défini par la revendication 1.

L'invention, ses caractéristiques et ses avantages sont précisés dans la description qui suit, en liaison avec les figures répertoriées ci-dessous.

La figure 1 présente un schéma de principe d'un combiné selon l'invention vu en coupe et partiellement esquissé. La figure 2 présente une vue éclatée d'un agencement récepteur selon l'invention.

La figure 3 présente une vue éclatée en perspective des pièces de connexion et d'assemblage de l'agencement proposé en figure 2.

Les figures 4 et 5 présentent respectivement une vue de dessus et une coupe latérale d'un montage de connexion et de fixation pour combiné selon l'invention.

La figure 6 présente une vue éclatée en coupe d'un agencement selon l'invention dans lequel un transducteur électrodynamique est substitué à un transducteur piézo-électrique.

Les figures 7 et 8 présentent en perspective les éléments constitutifs d'une variante d'un montage de fixation et de connexion susceptible d'être substitué à celui présenté sur les figures 4 et 5.

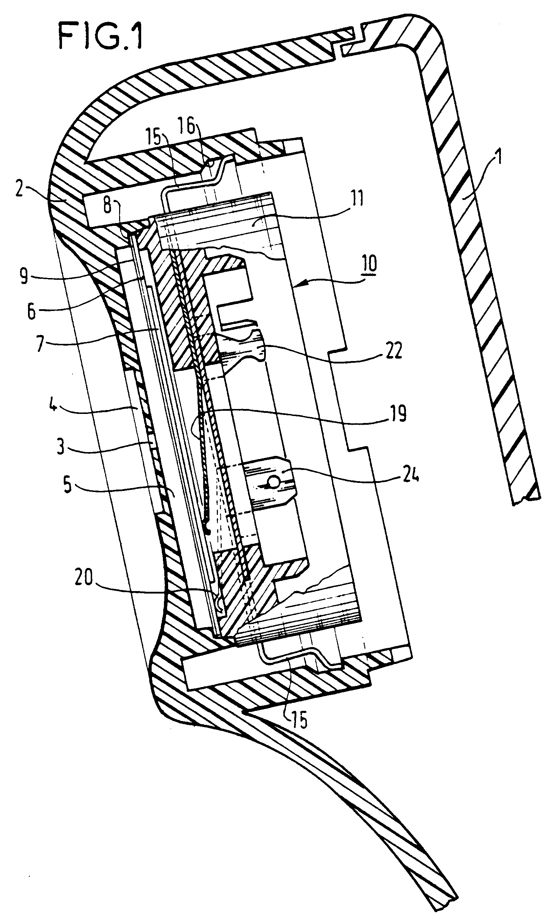

Le combiné téléphonique partiellement esquissé sur la figure 1 est supposée comporter deux transducteurs, qui fonctionnent l'un en tant que microphone, l'autre en tant que récepteur et qui sont incorporés chacun dans un agencement individuel.

Seul l'agencement récepteur, qui comporte un transducteur piézo-électrique est ici représenté, dans la mesure où le montage de l'autre agencement est soit identique à l'agencement récepteur proposé ici, soit, à défaut, classique.

L'agencement microphonique et l'agencement récepteur d'un combiné se logent d'un même côté de ce combiné de part et d'autre d'une partie 1, formant ici poignée, dont seule la naissance est esquissée ; le premier d'entre eux comporte une pièce microphonique destinée à être placée par l'utilisateur au voisinage de sa bouche alors que le second est doté d'une pièce réceptrice que cet utilisateur vient plaquer contre son oreille. Seule une pièce 2 ici supposée réceptrice, est présentée, la pièce émettrice piézo-électrique correspondante serait analogue.

La pièce microphonique et la pièce réceptrice s'assemblent avec au moins une autre pièce telle la partie 1, pour former la coque du combiné. Cette coque est préférablement réalisée en un ou plusieurs matériaux isolants rigides, elle enferme les autres éléments constitutifs du combiné.

Dans la forme de réalisation proposée, la pièce 2 réceptrice contient les autres composants de l'agencement récepteur, elle vient s'adapter dans un logement de la coque du combiné qu'elle ferme à ce niveau. Il en est éventuellement de même pour la pièce microphonique non représentée du combiné. La fixation des différents éléments constitutifs de la coque d'un combiné, y compris la pièce réceptrice et la pièce microphonique, est susceptible d'être obtenue, selon tout procédé usuel, par exemple par encliquetage, par soudure ultrasonique, ou collage, ou encore par l'intermédiaire de vis et d'écrous.

La pièce 2 réceptrice se présente sous la forme d'une boîte d'allure au moins approximativement ronde dont le fond ferme localement la coque du combiné. Elle est conçu pour favoriser la transmission des sons vers l'utilisateur et pour s'appliquer de manière confortable contre l'oreille de cet utilisateur.

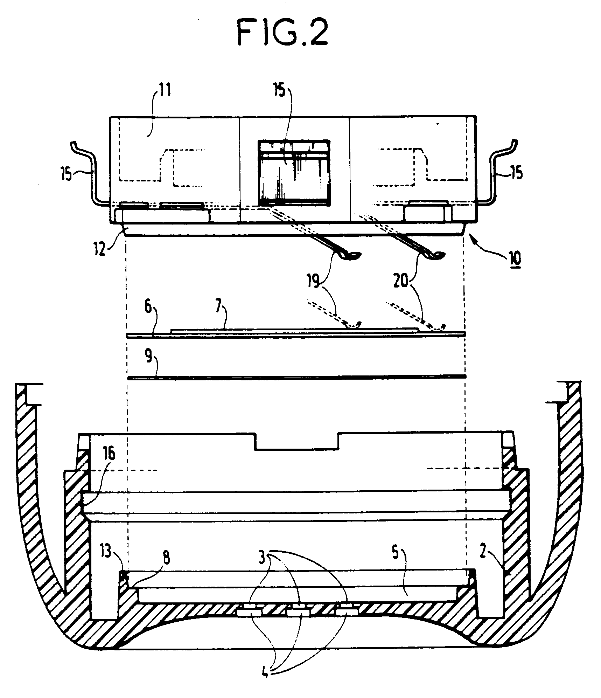

A cet effet, le fond de la pièce 2 est doté extérieurement d'une concavité centrale communiquant par l'intermédiaire d'embouchures calibrées 3, avec l'intérieur de la boîte que forme cette pièce réceptrice. Les embouchures sont ici ménagées au niveau de rainures parallèles 4 d'amincissement de paroi, comme on le voit aussi sur la figure 2, où ces rainures sont vues en coupe transversale, l'axe longitudinal de chacune étant perpendiculaire au plan de coupe.

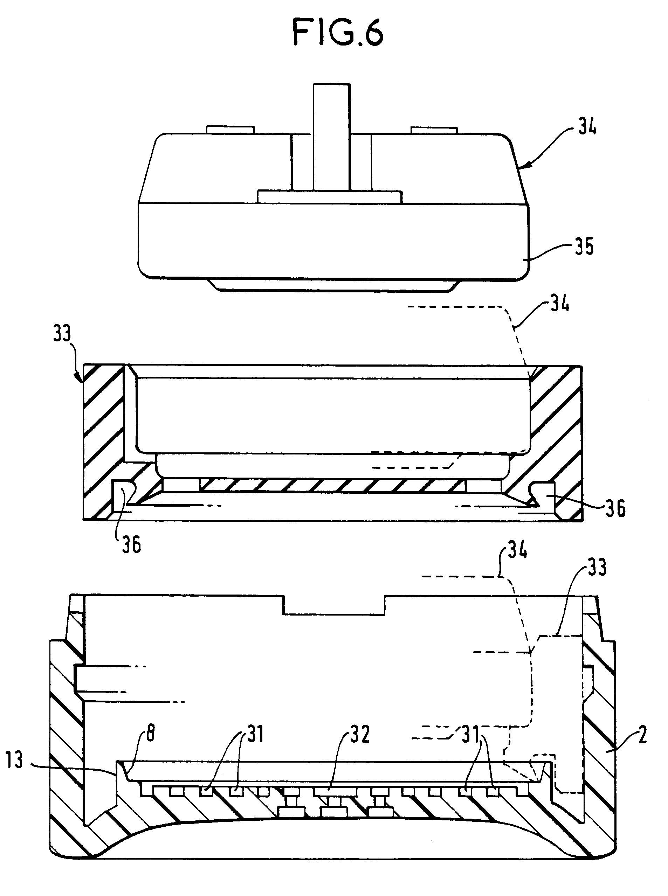

Les embouchures 3 débouchent au centre d'une chambre acoustique cylindrique 5 ménagée dans la boîte que forme la pièce 2, entre un disque transducteur et une paroi interne plane de la boîte, qui est traversée par les embouchures 3 et à laquelle le disque est parallèle. Dans une forme préférée de réalisation présentée en figure 6, la paroi interne, où sont réalisées les embouchures 3, est amincie en raison de la présence de rainures circulaires concentriques 31 ménagées autour d'un trou central 32 sur la face interne de cette paroi.

Le disque transducteur - figures 1 et 2 -, comporte une membrane vibrante circulaire 6, électriquement conductrice présentant une bonne élasticité et une bonne rigidité pour être apte à vibrer pour des signaux électriques de la bande téléphonique 300-3000 Hz.

Une pastille céramique piézo-électrique 7 est plaquée par une de ses faces contre la membrane vibrante 6 pour former le disque transducteur ; elle est extérieurement recouverte d'une couche électriquement conductrice, sur sa seconde face.

La membrane vibrante 6 repose par sa périphérie sur une portée circulaire auto centrante 8, visible en figure 2. Cette portée est ménagée en extrémité de chambre 5 dans la pièce 2 pour permettre un positionnement précis de la membrane vibrante.

Un disque 9, de matériau étanche et isolant, est classiquement disposé contre la membrane vibrante 6, de l'autre côté de celle-ci par rapport à la pastille 7, il s'intercale ici entre la partie circulaire 8 et cette membrane support 6.

La membrane vibrante 6 est plaquée contre la portée circulaire 8 par un montage 10 détaillé sur les figures 2 à 5.

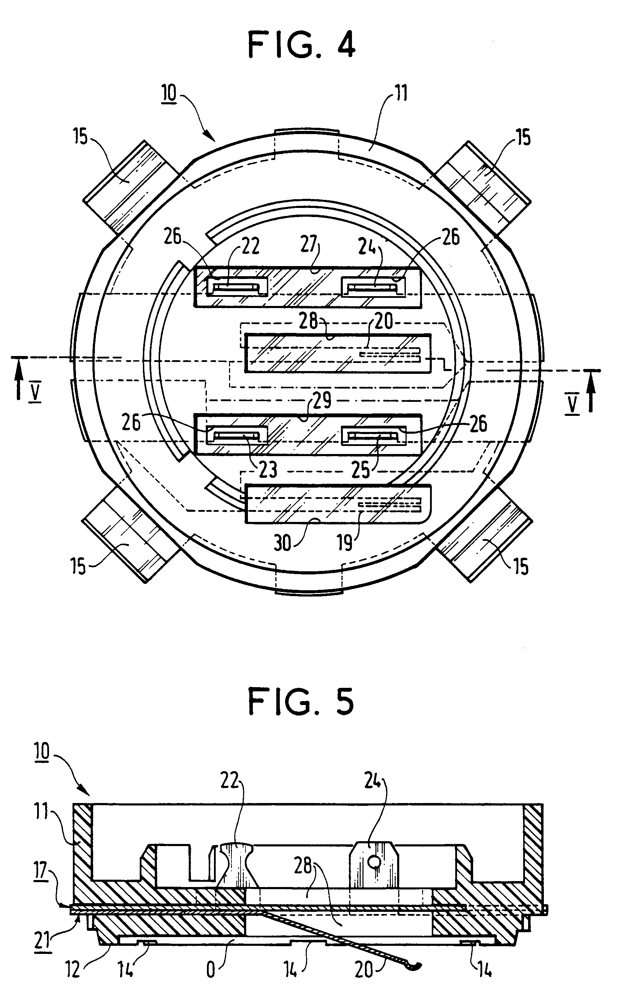

Le montage 10 comporte un bloc 11 en matériau isolant d'allure cylindrique qui assure l'immobilisation de la membrane vibrante 6 et du disque 9 en les coinçant par leur périphérie contre la partie circulaire 8 au moyen d'un embout presseur 12 à paroi latérale tronconique qui vient s'auto-centrer dans un logement tronconique creux complémentaire d'une surépaisseur cylindrique 13 bordant la portée circulaire 8 sur la pièce 2, -voir figures 2 et 5-.

L'extrémité de l'embout presseur 12 qui vient se plaquer contre la membrane vibrante forme un anneau radialement traversé par des rainures 14 déterminant des fuites acoustiques vers une chambre acoustique arrière 0, ici ménagée au centre de l'embout, selon une technique habituelle en la matière -voir figure 5-.

Le bloc 11 vient s'immobiliser en pression contre la périphérie de la membrane vibrante 6 sous l'action de pattes d'accrochage 15 venant s'incruster dans une rainure annulaire interne 16 de la pièce 2, cette rainure est parallèle à la portée 8 de manière à pousser le bloc 11 vers la chambre 5.

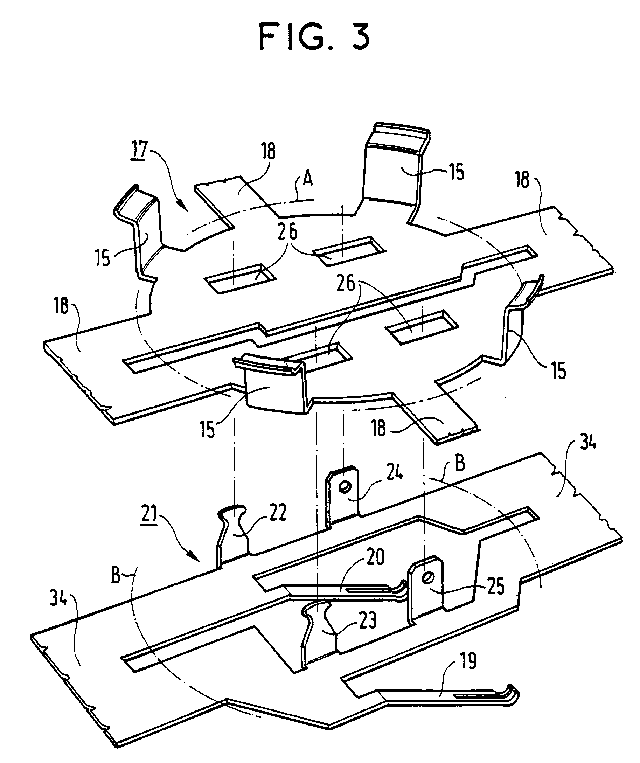

Dans l'exemple de réalisation proposé quatre pattes d'accrochage 15, en métal à ressort, sont simultanément réalisées à partir d'un flan plan qui est préalablement découpé et plié de manière à former une pièce cruciforme, telle 17 en figure 3. Le surmoulage de la pièce cruciforme 17 à l'aide d'un moule non représenté que l'on remplit de matériau isolant durcissable permet d'obtenir un positionnement précis des différentes pattes 15 dont une partie reste noyée dans le bloc 11 ainsi surmoulé.

Le positionnement relatif des pattes 15 entre elles est primitivement assuré par les parties 18 de pièce cruciforme 17 qui sont montrées extérieures au tireté circulaire A sur la figure 3 et qui sont éliminées après l'opération de surmoulage lorsque les pattes sont assujetties par le matériau durci qui forme alors le bloc 11.

Dans la forme de réalisation présentée l'introduction du bloc 11, dans la boîte ouverte que forme la partie 2, entraîne une compression centripète des lames de ressort que constituent les pattes 15, les extrémités libres de ces pattes viennent frotter contre la paroi interne de cette boîte jusqu'au moment où elles s'écartent élastiquement dans la rainure annulaire 16. L'extrémité de chaque patte 15 vient alors s'arc-bouter contre la paroi de cette rainure annulaire 16 pour repousser le bloc 11 en fond de boîte et en pression sur la portée 8, via la membrane vibrante 6.

La mise sous tension sélective, ou plus précisément la mise en liaison électrique de la membrane vibrante 6 et de la pastille piézo-électrique 7 s'effectuent par l'intermédiaire de deux contacts 19 et 20 respectivement réalisés sous forme de pattes élastiques indépendantes venant en appui l'une sur la pastille en dehors de la membrane et l'autre sur la membrane en dehors de la pastille, ainsi qu'on le voit sur la figure 1 où l'emplacement des contacts 19, 20 sur le disque transducteur est indiqué en tireté.

Dans l'exemple de réalisation proposé, les contacts 19 et 20 sont réalisés par découpe et pliage à partir d'un flan en métal conducteur et sous la forme d'une pièce conductrice primitivement unique 21 qui est plaquée contre la pièce 17 avant surmoulage du bloc 11. Le pliage est effectué de manière que les contacts saillent en oblique et sous forme de pattes, au-delà de l'embout presseur 12 lorsque le bloc 11 est place, ces contacts entrent alors en contact électrique respectivement l'un avec la membrane vibrante 6, l'autre avec la pastille 7.

Le positionnement de la pièce 21 par rapport à la pièce 17 avant surmoulage est assuré par la pénétration d'ici quatre prolongements 22, 23, 24, 25 qui sont pliés à angle droit, de l'autre côté du flan initial par rapport aux contacts 19, 20, et qui pénétrent dans quatre encoches correspondantes 26 de la pièce 17. Les parties 34 montrées extérieures au tireté circulaire B sur la figure 3 sont découpées après surmoulage du bloc 11 sur les pièces 17 et 21 accolées. Le découpage des parties 18 et 34 après surmoulage assurent une élimination des éléments de liaison électrique formées par ces parties entre d'une part les prolongements 22, 24 et le contact 20 et d'autre part les prolongements 23, 25 et le contact 19. Il est à noter à ce propos que la figure 1 est un schéma de principe et ne présente pas exactement les positions relatives exactes des pattes 15 et des contacts 19, 20.

Dans la réalisation proposée les prolongements 24, 25, qui saillent à l'extérieur du bloc 11 à l'opposé de l'embout presseur 12, sont conformés pour recevoir des connexions par fils, par exemple du type cosse FASTON, alors que les prolongements 22, 23 sont prévus pour recevoir directement des fils de connexion, par exemple pour une classique bobine non figurée destinée à créer un champ électromagnétique au profit de la prothèse auditive d'un utilisateur malentendant à partir des courants de conversation reçus de la ligne téléphonique via les bornes 24, 25.

Comme indiqué au cours de la description le bloc 11 est surmoulé sur les pièces 17 et 21 dont les parties 18 et 34 sont éliminées après surmoulage de manière à obtenir un corps, d'allure cylindrique dans la réalisation proposée, dont saille les contacts 19, 20 à une extrémité formant un embout presseur 12. L'autre extrémité est ici creuse et possède un fond garni de rainures parallèles 27, 28, 29, 30.

Les rainures 27 et 29 permettent la saillie respectivement des prolongements 22, 24 et 23, 25 dans la cavité obtenue dans le creux de ladite autre extrémité.

La réalisation d'une pièce 2, réceptrice ou microphonique et du combiné qu'elle comporte est en conséquence simplifiée.

Le moulage de la boîte d'une pièce 2, le surmoulage du bloc 11 sur les pièces 17, 21 et la découpe des parties 18, 34 de ces pièces s'effectuant isolément, il ne reste plus qu'à empiler le disque 9, le disque transducteur 6-7 et le bloc 11 dans la cavité de la boîte de la pièce 2, en position centrale appropriée, et d'encliqueter les pattes 15 dans la rainure annulaire 16 pour obtenir un assemblage.

Le positionnement des contacts 19 et 20, s'effectue de manière que l'un soit à proximité de la périphérie de la membrane vibrante 6 et que l'autre soit dans la zone centrale de la pastille qui est coaxiale avec ladite membrane vibrante. Le positionnement est assuré à partir du moment où le disque transducteur 6-7 est correctement placé sur sa portée et où l'embout presseur est introduit dans la portion tranconique 13 et en appui sur le disque, sans contrainte angulaire particulière dans le plan transversal.

Après connexion des fils électriques de liaison du combiné aux prolongements notamment 24, 25, le montage du combiné peut se résumer à un assemblage simple par exemple par positionnement approprié et encliquetage de la ou des pièces 2 avec la ou les parties complémentaires du boîtier.

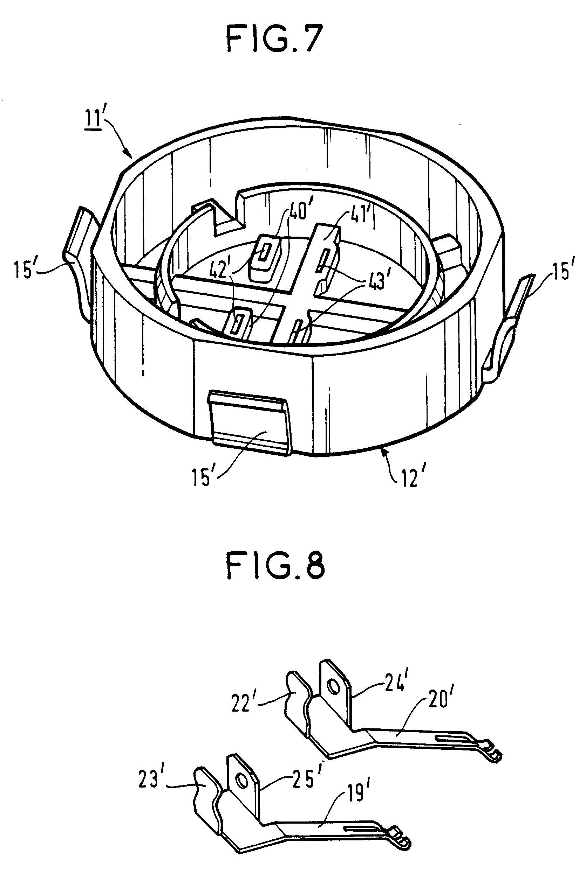

Selon une variante préférée de l'invention, un montage alternatif, dont les éléments constitutifs sont présentés sur les figures 7 et 8, est susceptible de se substituer, dans une pièce de logement 2 d'un combiné, au montage 10 regroupant le bloc 11, les pattes d'accrochage 15 et les pattes de contact 19 et 20.

Le montage comporte un bloc 11′, creux, en matériau moulé destiné à se substituer au bloc 11. Ce bloc 11′ possède un embout presseur 12′ qui est au moins analogue, sinon identique, à l'embout presseur 12, dont il assure les fonctions vis-à vis du disque piézo-électrique 6, 7 en relation avec la pièce de logement 2 ou il s'insère.

Le bloc 11′, d'allure grossièrement cylindrique comporte des pattes semi-élastiques d'accrochage 15′, moulées avec le bloc dont elles font partie. Ces pattes d'accrochage 15′ sont destinées à positionner le bloc 11′ dans la pièce de logement 2 et à assurer l'immobilisation périphérique du disque piézo-électrique 6, 7, chacune d'elles s'accroche ici à cet effet dans la rainure 16 par son extrémité libre, alternativement plusieurs éléments peuvent être prévus dans la pièce de logement 2 pour recevoir chacun l'une des pattes d'accrochage 15′ d'un bloc 11′.

Les pattes de contact 19′ et 20′, en matériau élastique bon conducteur, sont ici réalisées séparément du bloc 11′ dans lequel elles viennent s'immobiliser dans des formes moulées 40′,41′ de ce bloc. Ces formes 40′, 41′ ménagées au fond de ce bloc, permettent aux pattes de contact de se positionner en saillie en avant de l'embout presseur 12′ pour prendre appui sur des parties conductrices de contact de la membrane 6 et de la pastille 7 du disque piézo-électrique, lorsque le bloc et le disque sont en place.

Des embouchures ménagées dans les formes 40′,41′ permettent la traversée de prolongements 22′, 23′, 24′ et 25′ des pattes de contact 19′ et 20′ qui correspondent fonctionnellement aux prolongements 22, 23, 24, et 25 pour la connexion de fils ou de cosses de raccordement électrique.

L'agencement montré en figure 6 est destiné à permettre la substitution d'un transducteur électrodynamique usuel à un transducteur piézo-électrique tel qu'envisagé ci-dessus, en cas de besoin.

A cet effet, un manchon d'adaptation 33, ici d'allure cylindrique et réalisé en matériau élastomère, vient se positionner dans la pièce de logement 2 où l'ou désire placer une classique capsule téléphonique électrodynamique 34 dont l'extrémité de transmission des sons est ménagée en bout d'une portion cylindrique 35.

Le manchon d'adaptation 33 vient coiffer l'extrémité de transmission des sons de la capsule 34 par une de ses deux extrémités en ceinturant la portion cylindrique 35, un tel assemblage étant montré en tireté en zone médiane de figure 6.

L'autre extrémité du manchon d'adaptation 33 vient se positionner dans la pièce de logement 2 par rapport à la portée autocentrante 8 contre laquelle elle vient presser.

Dans un exemple de réalisation, préféré le manchon est doté d'une rainure circulaire d'extrémité 36 qui vient coiffer la protubérance cylindrique 13 en se positionnant sur la portée circulaire 8 et contre les parois externe et interne de la protubérance 13, ainsi qu'on le voit en tireté à la partie basse de la figure 6, où la capsule est montrée positionnée.

La capsule 34 est alors au moins partiellement immobilisée par la pression du manchon coincé entre la paroi cylindrique interne de la pièce de logement et elle-même.

## Revendications

1. Combiné téléphonique aux deux extrémités duquel s'ouvrent latéralement, d'une part, un agencement téléphonique, d'autre part un agencement récepteur, comportant un transducteur, dont l'un au moins est de type à disque piézo-électrique (6, 7), chacun étant au moins partiellement logé dans une pièce de logement (2), individuelle ou commune, au travers du fond de laquelle les sons sont transmis, cette pièce étant assemblée avec au moins une autre pièce (1), complémentaire, pour former la coque du combiné qu'elle ferme au moins localement vis-à-vis de l'extérieur en y affleurant ou en saillant, caractérisé en ce que l'une au moins des pièces de logement (2) comporte des moyens de positionnement et de fixation (13, 16) pour permettre d'assujettir le disque piézo-électrique et ses organes de connexion électrique (19, 19') dans cette pièce de logement par l'intermédiaire d'un embout presseur (12, 12') d'un bloc (11, 11') disposé de façon à maintenir à l'aide des moyens de positionnement et de fixation le disque piézo-électrique en position.

2. Combiné téléphonique selon la revendication 1, caractérisé en ce que la pièce de logement (2) se présente sous la forme d'une boîte qui comporte intérieurement une portée circulaire autocentrante (8) située à proximité du fond perforé d'embouchures pour la transmission des sons et recevant le bord extérieur du disque piézo-électrique qui est périphériquement maintenu en position par l'embout presseur (12, 12') dudit bloc, lui-même centré par un logement tronconique creux d'une surépaisseur (13), ceinturant la portée circulaire (8), et précisément positionné dans la pièce de logement (2) par des pattes d'accrochage (15, 15').

3. Combiné téléphonique selon la revendication 2, caractérisé en ce que l'embout presseur (12) est ménagé à une extrémité d'un bloc (11), en matériau isolant, surmoulé sur, d'une part, une partie noyée des pattes d'accrochage (15) qui saillent latéralement du bloc, d'autre part une partie noyée des pattes élastiques de contact (19, 20) qui saillent de l'embout presseur pour venir respectivement en appui sur les parties constitutives du disque piézo-électrique que constituent une pastille piézo-électrique (7) et une membrane vibrante (6) de ce disque.

4. Combiné téléphonique selon la revendication 2, caractérisé en ce que l'embout presseur (12′) est ménagé à une extrémité d'un bloc creux (11′), en matériau isolant moulé, comportant latéralement des pattes semi-élastiques et moulées d'accrochage (15′), destinées à immobiliser ledit bloc dans la pièce de logement (2) en s'assujettissant à un ou plusieurs éléments complémentaires (16) de cette pièce de logement, et des orifices permettant le passage et la fixation de pattes élastiques de contact saillant de l'embout presseur pour venir respectivement en appui sur les parties constitutives du disque piézo-électrique que constituent une pastille piézo-électrique (7) et une membrane vibrante (6) de ce disque.

5. Combiné téléphonique selon la revendication 3, caractérisé en ce que les parties noyées des pattes d'accrochage (15) et des pattes élastiques de contact sont obtenues à partir de deux pièces, plaquées l'une contre l'autre et électriquement en contact avant surmoulage du bloc, qui sont découpées en bordure de bloc, après surmoulage, pour isoler électriquement chaque patte élastique de contact de l'autre.

6. Combiné téléphonique selon l'une ou l'autre des revendications 3, 4, caractérisé en ce que les pattes élastiques de contact saillant de l'embout presseur (12 ou 12′) d'un bloc (11 ou 11′) vers le disque transducteur (6, 7) sont continués par des prolongements de raccordement individuels (22 à 25 ou 22′ à 25′) qui sont issus des parties de ces pattes qui sont fixées dans le bloc et qui saillent dans une cavité du bloc située de l'autre côté de ce bloc par rapport aux parties de contact de ces pattes avec le disque piézo-électrique.

7. Combiné téléphonique selon la revendication 1, caractérisé en ce qu'il comporte au moins une pièce (2) de logement pour transducteur piézo-électrique qui se présente sous la forme d'une boîte dont le fonds doté d'embouchures (3) pour la transmission des sons, affleure ou saille de la coque du combiné qu'elle complète et ferme localement, ladite boîte comportant intérieurement une portée circulaire autocentrante pour un disque piézo-électrique et d'autre part un manchon d'adaptation (33) pour positionner une capsule électrodynamique (34) dans la pièce de logement concernée en lieu et place d'un transducteur à disque piézo-électrique.

8. Combiné téléphonique selon la revendication 7, caractérisé en ce qu'il comporte un manchon d'adaptation (33) coopérant avec la portée circulaire autocentrante (8) de la pièce de logement (2) où il est situé pour son positionnement dans le combiné.

9. Combiné téléphonique selon la revendication 8, caractérisé en ce qu'il comporte un manchon d'adaptation (33), en matériau élastomère, qui est doté d'une rainure circulaire (36) à une première extrémité pour se positionner intérieurement par rapport à la portée circulaire autocentrante (8) de la pièce de logement (2) où il est placé, en ceinturant le support en surépaisseur (13) où est ménagée cette portée, ledit manchon recevant une capsule électrodynamique à son autre extrémité.

## Claims

1. A telephone handset having a transmitter assembly and a receiver assembly opening out laterally at opposite ends thereof, each assembly including a transducer, at least one of which is of the piezoelectric disk type (6, 7), each assembly being at least partially housed in a housing part (2) which may be individual or common, with sound being transmitted through the bottom thereof, said part being assembled with at least one other complementary part (1) in order to form the handset shell which it closes from the outside at least locally by being flush therewith or projecting therefrom, the handset being characterized in that at least one of the housing parts (2) includes positioning and fixing means (13, 16) for enabling the piezoelectric disk and its electrical connection members (19, 19') to be held in place in said housing part by a presser endpiece (12, 12') of a block (11, 11') disposed in such a way as to hold the piezoelectric disk in position with the help of the positioning and fixing means.

2. A telephone handset according to claim 1, characterized in that the housing part (2) is in the form of a box including a self-centering circular bearing surface (8) on its inside situated close to a bottom perforated by openings for transmitting sound and receiving the outside edge of the piezoelectric disk which is peripherally held in position by the presser endpiece (12, 12') of said block which is itself centered by a hollow frustoconical housing of a rim (13) surrounding the circular bearing surface (8) and which is accurately positioned inside the housing part (2) by latching tabs (15, 15').

3. A telephone handset according to claim 2, characterized in that the presser endpiece (12) is provided on one face of a block (11) of insulating material which is molded firstly over an embedded portion of the latching tabs (15) which project sideways from the block and secondly over an embedded portion of resilient contact tabs (19, 20) projecting from the presser endpiece for bearing against respective component parts of the piezoelectric disk constituted by a piezoelectric wafer (7) and by a vibrating membrane (6) of said disk.

4. A telephone handset according to claim 2, characterized in that the presser endpiece (12') is provided on one face of a hollow block (11') of molded insulating material including integrally molded semi-resilient lateral latching tabs (15') for holding said block in the housing part (2) by engaging one or more complementary portions (16) of said housing part, and orifices for passing and fixing resilient contact tabs projecting from the presser endpiece for bearing against respective component parts of the piezoelectric disk constituted by a piezoelectric wafer (7) and by a vibrating membrane (6) of said disk.

5. A telephone handset according to claim 3, characterized in that the embedded portions of the latching tabs (15) and of the resilient contact tabs are obtained from two parts which are pressed against each other and in electrical contact prior to the box being molded thereover, which parts are cut off at the margin of the block after molding in order to insulate the electrical tabs electrically from each other.

6. A telephone handset according to claim 3 or 4, characterized in that the resilient contact tabs projecting from the presser endpiece (12 or 12') of a block (11 or 11') towards the transducer disk (6, 7) are constituted by individual connection extensions (22 to 25 or 22' to 25') which come from portions of said tabs which are fixed in the block and which project into a cavity of the block situated on the opposite side of the block relative to the portions of said tabs that make contact with the piezoelectric disk.

7. A telephone handset according to claim 1, characterized in that it includes at least one housing part (2) for housing a piezoelectric transducer, said housing parts being in the form of a box whose bottom is provided with openings (3) for transmitting sound, which box is flush with or projects from the shell of the handset of which it forms a part and which it closes locally, the inside of said box including a self-centering circular bearing surface for a piezoelectric disk, the handset also including an adaptor sleeve (33) for positioning an electrodynamic capsule (34) in the corresponding housing part instead of and in the place of a piezoelectric disk transducer.

8. A telephone handset according to claim 7, characterized in that it includes an adaptor sleeve (33) co-operating with the self-centering circular bearing surface (8) of the housing part (2) in which it is situated for the purpose of positioning it in the handset.

9. A telephone handset according to claim 8, characterized in that it includes an adaptor sleeve (33) of elastomer material, which sleeve is provided with a circular groove (36) in a first one of its faces for taking up a position inside the self-centering circular bearing surface (8) of the housing part (2) in which it is placed, while surrounding the support rim (13) in which said bearing surface is formed, said sleeve receiving an electrodynamic capsule via its other face.

## Patentansprüche

1. Telefonhörer mit zwei Enden, an denen sich seitlich einerseits ein Mikrophongehäuse, andererseits ein Empfangsgehäuse öffnet, die jeweils einen Wandler enthalten, von denen mindestens einer vom Typ mit piezoelektrischer Scheibe (6, 7) ist, wobei jeder Wandler mindestens teilweise in einem eigenen oder gemeinsamen Aufnahmegehäuse (2) untergebracht ist, durch dessen Boden der Schall übertragen wird, und wobei das Gehäuse mit mindestens einem dazu komplementären anderen Bauteil (1) vereinigt ist, um die Gehäuseschale des Hörers zu bilden, die das Bauteil mindestens örtlich gegenüber der Außenseite glatt oder vorspringend abschließt, dadurch gekennzeichnet, daß mindestens eines der Gehäuse (2) Positionierungs- und Befestigungsmittel (13, 16) aufweist, die es ermöglichen, die piezoelektrische Scheibe und ihre elektrischen Anschlußglieder (19, 19') in diesem Gehäuse über einen Preßansatz (12, 12') eines Blocks (11, 11') anzupressen, wobei der Block so angeordnet ist, daß er mit Hilfe der Positionierungs- und Befestigungsmittel die piezoelektrische Scheibe in ihrer Stellung hält.

2. Telefonhörer nach Anspruch 1, dadurch gekennzeichnet, daß das Gehäuse (2) die Form einer Dose besitzt, die im Inneren eine selbstzentrierende kreisförmige Schulter (8) aufweist, die in der Nähe des Bodens angeordnet ist, der mit Löchern zur Übertragung des Schalls versehen ist und den äußeren Rand der piezoelektrischen Scheibe aufnimmt, die in ihrer Position peripher durch den Preßansatz (12, 12') des Blockes gehalten wird, der seinerseits durch eine hohle, kegelstumpfförmige Form eines Vorsprungs (13) zentriert wird, der die kreisförmige Schulter (8) umgibt und im Gehäuse (2) durch Einrastklauen (15, 15') präzise positioniert wird.

3. Telefonhörer nach Anspruch 2, dadurch gekennzeichnet, daß der Preßansatz (12) an einem Ende eines Blocks (11) aus isolierendem Material angebracht ist, der einerseits über einen eingebetteten Abschnitt der Einrastklauen (15), die seitlich aus dem Block vorspringen, und andererseits über einen eingebetteten Abschnitt der elastischen Kontaktklauen (19, 20) gegossen ist, die aus dem Preßansatz vorspringen, um sich auf den funktionswesentlichen Abschnitten der piezoelektrischen Scheibe abzustützen, die von einer piezoelektrischen Tablette (7) und einer Vibriermembran (6) der Scheibe gebildet werden.

4. Telefonhörer nach Anspruch 2, dadurch gekennzeichnet, daß der Preßansatz (12') an einem Ende eines hohlen Blockes (11') aus isolierendem Gießmaterial angearbeitet ist, der seitlich angegossene, halbelastische Einrastklauen (15') aufweist, die zum Festsetzen des Blocks im Gehäuse (2) durch Festklemmen an einem oder mehreren dazu komplementären Elementen (16) des Gehäuses bestimmt sind, und der Öffnungen aufweist, die den Durchtritt und die Befestigung elastischer Kontaktklauen ermöglichen, die über den Preßansatz vorspringen, um sich auf den funktionswesentlichen Teilen der piezoelektrischen Scheibe abzustützen, die von einer piezoelektrischen Tablette (7) und einer Vibriermembran (6) der Scheibe gebildet werden.

5. Telefonhörer nach Anspruch 3, dadurch gekennzeichnet, daß die eingebetteten Abschnitte der Einrastklauen (15) und der elastischen Kontaktklauen aus zwei aneinander anliegenden und vor dem Gießen des Blocks elektrisch in Kontakt stehenden Teilen erhalten werden, die nach dem Gießen an der Umrandung des Blockes abgeschnitten werden, um die elastischen Kontaktklauen elektrisch voneinander zu isolieren.

6. Telefonhörer nach einen der Ansprüche 3 und 4, dadurch gekennzeichnet, daß die elastischen Kontaktklauen, die über den Preßansatz (12 oder 12') eines Blockes (11 oder 11') zur Wandlerscheibe (6, 7) vorspringen, mit individuellen Anschlußverlängerungen (22 bis 25 oder 22' bis 25') versehen sind, die aus denjenigen Abschnitten dieser Klauen hervorgegangen sind, die im Block fixiert sind und in eine Ausnehmung des Blocks vorspringen, die sich an der anderen Seite des Blocks relativ zu den Kontaktabschnitten dieser Klauen mit der piezoelektrischen Scheibe befindet.

7. Telefonhörer nach Anspruch 1, dadurch gekennzeichnet, daß er mindestens ein Gehäuse (2) für den piezoelektrischen Wand-ler aufweist, das die Form einer Dose besitzt, deren Boden, der mit Öffnungen (3) zur Schallübertragung versehen ist, mit der Oberfläche der Schale des Hörers, die das Gehäuse vervollständigt und örtlich abschließt, bündig ist oder gegen diese vorspringt, wobei das Gehäuse im Inneren eine selbstzentrierende kreisförmige Schulter für eine piezoelektrische Scheibe und andererseits eine Anpassungshülse (33) aufweist, um eine elektrodynamische Kapsel (34) in dem betreffenden Gehäuse anstelle eines Wandlers mit piezoelektrischer Scheibe anzuordnen.

8. Telefonhörer nach Anspruch 7, dadurch gekennzeichnet, daß er eine Anpassungshülse (33) aufweist, die mit der selbstzentrierenden kreisförmigen Schulter (8) des Gehäuses (2) zusammenwirkt, auf der die Hülse für ihre Positionierung im Hörer aufliegt.

9. Telefonhörer nach Anspruch 8, dadurch gekennzeichnet, daß er eine Anpassungshülse (33) aus Elastomermaterial aufweist, die an einem ersten Ende mit einer kreisförmigen Nut (36) versehen ist, um sich relativ zur selbstzentrierenden kreisförmigen Schulter (8) des Gehäuses (2), in dem die Hülse angeordnet ist, unter Umgreifung des Vorsprungs (13) zu plazieren, auf dem die Schulter ausgebildet ist, wobei die Hülse an ihrem anderen Ende eine elektrodynamische Kapsel aufnimmt.
